(19) Europäisches Patentamt
European Patent Office
Office européen des brevets

(11) **EP 4 667 413 A1**

(12) **EUROPEAN PATENT APPLICATION**
published in accordance with Art. 153(4) EPC

(43) Date of publication:
**24.12.2025 Bulletin 2025/52**

(21) Application number: **24880035.1**

(22) Date of filing: **11.10.2024**

(51) International Patent Classification (IPC):
*C01B 32/00* (2017.01)   *C01B 33/02* (2006.01)
*C01B 33/035* (2006.01)   *H01M 4/36* (2006.01)
*H01M 4/587* (2010.01)   *H01M 4/583* (2010.01)
*H01M 4/133* (2010.01)   *H01M 4/134* (2010.01)
*H01M 10/052* (2010.01)

(52) Cooperative Patent Classification (CPC):
**C01B 32/00; C01B 32/05; C01B 33/02;
C01B 33/035; H01M 4/02; H01M 4/133;
H01M 4/134; H01M 4/36; H01M 4/583;
H01M 4/587; H01M 10/052;** Y02E 60/10

(86) International application number:
**PCT/KR2024/015358**

(87) International publication number:
**WO 2025/084698 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023  KR 20230140497**

(71) Applicant: **LG Energy Solution, Ltd.
Seoul 07335 (KR)**

(72) Inventors:
• **KIM, Taeho
  Daejeon 34122 (KR)**
• **LEE, Seunggwan
  Daejeon 34122 (KR)**
• **SHIN, Sun Young
  Daejeon 34122 (KR)**
• **LEE, Yong Ju
  Daejeon 34122 (KR)**

(74) Representative: **Hoffmann Eitle
Patent- und Rechtsanwälte PartmbB
Arabellastraße 30
81925 München (DE)**

(54) **SILICON-CARBON COMPOSITE, ANODE ACTIVE MATERIAL, ANODE COMPRISING ANODE ACTIVE MATERIAL, AND SECONDARY BATTERY COMPRISING ANODE**

(57) The present invention relates to a silicon-carbon composite, an anode active material comprising same, an anode composition, an anode, a lithium secondary battery, a battery module, and a battery pack, the silicon-carbon composite having a Raman spectrum in which the ratio ($B_D/B_{Si}$) of the intensity of the D band to the intensity of the Si peak or the ratio ($B_G/B_{Si}$) of the intensity of the G band to the intensity of the Si peak is greater than 5 and less than 50, and the Si peak is between 495 cm$^{-1}$ and 515 cm$^{-1}$.

[Figure 1]

EP 4 667 413 A1

## Description

[Technical Field]

The present application claims priority to and the benefit of Korean Patent Application No. 10-2023-0140497 filed in the Korean Intellectual Property Office on October 19, 2023, the entire contents of which are incorporated herein by reference.

The present application relates to a silicon carbon composite, a negative electrode active material including the same, a negative electrode including the negative electrode active material, and a secondary battery including the negative electrode.

[Background Art]

Recently, with the rapid spread of electronic devices using batteries, such as mobile phones, laptop computers, electric vehicles, electrically-powered tools, and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In general, a lithium secondary battery includes a positive electrode, a negative electrode, a separator interposed between the positive electrode and the negative electrode, an electrolyte, an organic solvent, and the like. In addition, the positive electrode and the negative electrode may be formed with active material layers each including a positive electrode active material and a negative electrode active material on current collectors.

In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Batteries using graphite as a negative electrode active material can exhibit a high discharge voltage of 3.6 V, but there is a limit to increasing an energy density due to low capacity.

On the other hand, silicon-based active materials have high capacity and efficiency and are attracting attention as next-generation negative electrode active materials. Therefore, there is a demand for development of silicon-based active materials with high capacity or efficiency characteristics.

[Detailed Description of the Invention]

[Technical Problem]

An exemplary embodiment of the present invention is intended to provide a silicon carbon composite, which has excellent capacity and/or efficiency characteristics and can be used as a negative electrode active material with a high energy density, a negative electrode active material, a negative electrode, and a lithium secondary battery.

[Technical Solution]

An exemplary embodiment of the present invention provides a silicon carbon composite in which, when an intensity of a Si peak is referred to as $B_{Si}$, an intensity of a D band is referred to as $B_D$, and an intensity of a G band is referred to as $B_G$ in a Raman spectrum, a ratio ($B_D/B_{Si}$) of the intensity of the D band to the intensity of the Si peak or a ratio ($B_G/B_{Si}$) of the intensity of the G band to the intensity of the Si peak is greater than 5 and less than 50, and a position of the Si peak is present between 495 cm$^{-1}$ and 515 cm$^{-1}$.

According to an exemplary embodiment of the present invention, the silicon carbon composite according to the above-described exemplary embodiment has a ratio ($B_D/B_G$) of the intensity of the D band to the intensity of the G band of greater than 1.3 and less than 1.7 in the Raman spectrum.

An exemplary embodiment of the present invention provides a negative electrode active material including the silicon carbon composite according to the exemplary embodiment described above.

An exemplary embodiment of the present invention provides a negative electrode composition including the negative electrode active material according to the exemplary embodiment described above.

An exemplary embodiment of the present invention provides a negative electrode including the negative electrode composition according to the exemplary embodiment described above.

An exemplary embodiment of the present invention provides a lithium secondary battery including the negative electrode according to the above-described exemplary embodiment, a positive electrode, and a separator.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

[Advantageous Effects]

According to exemplary embodiments of the present invention, the silicon carbon composite, in which, in the Raman spectrum, the ratio of the intensity of the D band or G band peak to the intensity of the Si peak falls within a specific range and the position of the Si peak is present within a specific range, is used as a negative electrode active material, thereby enabling provision of a lithium secondary battery with improved capacity and/or efficiency. In addition, by satisfying the above range, it is possible to improve process compatibility and gas generation problems of aqueous binders that occur in the case of silicon-based active materials.

[Brief Description of Drawings]

FIG. 1 shows spectra obtained through Raman analysis of negative electrodes using silicon carbon composites of Examples 1 to 4.
FIG. 2 shows spectra obtained through Raman analysis of negative electrodes using SiO or silicon carbon composites of Comparative Examples 1 to 5.

[Best Mode]

Hereinafter, the present invention will be described in more detail for better understanding of the present invention. The present invention may be implemented in various different forms, and is not limited to the exemplary embodiments described herein. In this case, it should be understood that the terms or words used in the present specification and claims should not be construed as being limited to their general and dictionary meanings, but should be construed in accordance with the meanings and concepts consistent with technical spirit of the present invention, based on the principle that the inventor is allowed to define terms appropriately for the best explanation.

It will be further understood that the terms "comprises", "includes" or "have" when used in the present specification specify the presence of stated features, numbers, steps, constitutional elements and/or combinations thereof, but do not preclude the presence or addition of one or more other features, numbers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

It should be understood that the terms or words used in the present specification should not be construed as being limited to their general and dictionary meanings, but should be construed in accordance with the meanings and concepts consistent with technical spirit of the present invention, based on the principle that the inventor is allowed to define terms appropriately for the best explanation.

As used herein, the singular forms "a", "an" and "the" are intended to include the plural forms as well, unless the context clearly indicates otherwise.

Hereinafter, preferred exemplary embodiments of the present invention will be described in detail. However, it should be understood that the exemplary embodiments of the present invention may be modified in various forms and the scope of the present invention is not limited to the exemplary embodiments described below.

In the present specification, a Raman spectrum may be obtained by setting 100 points on a surface of a sample, irradiating each point with a 532 nm laser, and then calculating an average value of spectra.

In the Raman spectrum, a D band refers to a band with a peak near 1350 cm$^{-1}$. The D band occurs due to irregularities in the arrangement of atoms within a crystal and signifies a degree of disorder or structural instability in a material.

In the Raman spectrum, a G band refers to a band with a peak near 1600 cm$^{-1}$. The G band signifies an sp$^2$ bonding between carbon atoms and provides information about a crystal structure of a material and a form of carbon bonding.

In the Raman spectrum, a Si peak occurs due to vibrations of a Si crystal structure and is used as an indicator of the crystallinity, stress, and other structural properties of Si.

In the Raman spectrum, a peak of the D band refers to a point where the scattering intensity measured within a range of 1300 to 1370 cm$^{-1}$ is maximum and a peak with a scattering intensity of 10% or higher of the point, and a peak with a scattering intensity below 10% of the maximum scattering intensity within the D band is not included in the peak of the D band.

In the Raman spectrum, a peak of the G band refers to a point where the scattering intensity measured within a range of 1580 to 1600 cm$^{-1}$ is maximum and a peak with a scattering intensity of 10% or higher of the point, and a peak with a scattering intensity below 10% of the maximum scattering intensity within the G band is not included in the peak of the G band.

In the Raman spectrum, a Si peak refers to a point where the scattering intensity measured within a range of 400 to 600 cm$^{-1}$ is maximum and a peak with a scattering intensity of 10% or higher of the point, and a peak with a scattering intensity below 10% of the maximum scattering intensity within the range is not included in the Si peak.

In the Raman spectrum, peaks may overlap to appear as a shoulder peak, and two or more peaks may coexist.

In the Raman spectrum, when noise occurs, the noise may be removed using a noise smoothing technique so that only a main peak can be observed.

In the present specification, an intensity of a peak refers to a value obtained by deconvolving a Raman spectrum for each peak, fitting it to a 'Gaussian/Lorentzian' model, and then integrating an area under a resulting Gaussian function graph.

In the present specification, an intensity of the peak of the D band refers to an integrated value of the Gaussian function of a peak present within a range of 1300 to 1370 cm$^{-1}$.

In the Raman spectrum, an intensity of the peak of the G band refers to an integrated value of the Gaussian function of a peak present within a range of 1580 to 1600 cm$^{-1}$.

In the Raman spectrum, an intensity of the Si peak refers to an integrated value of the Gaussian function of a peak present within a range of 400 to 600 cm$^{-1}$.

Here, if at least one of the peak of the D band, the peak of the G band, and the Si peak includes two or more peaks, when calculating the intensity, the intensity of the corresponding peak is calculated as a sum of intensities of the two or more peaks.

When an intensity of the Si peak is referred to as $B_{Si}$, an intensity of the D band is referred to as $B_D$, and an intensity of the G band is referred to as $B_G$ in the Raman spectrum, a ratio ($B_D/B_{Si}$) of the intensity of the D band to the intensity of the Si peak or a ratio ($B_G/B_{Si}$) of the intensity of the G band to the intensity of the Si peak of greater than 5 and less than 50 enables features of high initial capacity, high efficiency, and an excellent cycle capacity maintenance rate.

According to an exemplary embodiment, the ratio ($B_D/B_{Si}$) of the intensity of the D band to the intensity of the Si peak or the ratio ($B_G/B_{Si}$) of the intensity of the G band to the intensity of the Si peak may be greater than 5 and less than 45, greater than 10 and less than 40, or greater than 15 and less than 35.

According to an exemplary embodiment, a position of the Si peak may be present between 495 cm$^{-1}$ and 515 cm$^{-1}$. When the Si peak is present below the above range, specifically between 450 to 495 cm$^{-1}$, it indicates that silicon is present in an amorphous state, and in this case, reactivity with a solvent is high, which can cause a decrease in viscosity and gas generation. When the Si peak is present above the above range, specifically near 520 cm$^{-1}$, silicon is present in a crystalline state, which may reduce capacity, efficiency, and life.

According to an exemplary embodiment, the ratio of the intensity of the D band to the intensity of the G band ($B_D/B_G$) may be greater than 1.3 and less than 1.7, greater than 1.4 and less than 1.7, or greater than 1.4 and less than 1.6.

According to an exemplary embodiment, when the intensity of the Si peak is referred to as $B_{Si}$, the intensity of the D band is referred to as $B_D$, and the intensity of the G band is referred to as $B_G$, the ratio ($B_D/B_{Si}$) of the intensity of the D band to the intensity of the Si peak and the ratio ($B_G/B_{Si}$) of the intensity of the G band to the intensity of the Si peak may be greater than 5 and less than 50, respectively.

Another exemplary embodiment of the present invention provides a battery module including the secondary battery as a unit cell, and a battery pack including the same. Since the battery module and the battery pack include the secondary battery having high capacity and high rate and cycle characteristics, the battery module and the battery pack may be used as a power source of a medium to large sized device selected from the group consisting of an electric vehicle, a hybrid electric vehicle, a plug-in hybrid electric vehicle, and a power storage system.

According to an exemplary embodiment, the silicon carbon composite is a composite of Si and C, in which Si and C (e.g., graphite) are present, respectively. In the present specification, the silicon carbon composite may be denoted as Si/C. The silicon carbon composite may consist of Si and C that are not bonded to each other, but may also contain an additional component as needed. For example, the silicon carbon composite may or may not contain silicon carbide denoted as SiC. When the silicon carbon composite contains silicon carbide, a content thereof is 3 wt% or less. The silicon carbon composite may be present in a crystalline state, an amorphous state, or a mixed state thereof. According to one example, C in the silicon carbon composite may be present in an amorphous state.

According to an exemplary embodiment, the silicon carbon composite may be a particle including a porous carbon-based particle and silicon provided on at least a portion of an inside and a surface of the porous carbon-based particle; or a particle including a porous silicon-based particle and carbon provided on at least a portion of an inside and a surface of the porous silicon-based particle.

According to an exemplary embodiment, the silicon carbon composite is a particle having a porous carbon-based particle and silicon provided on at least a portion of an inside and a surface of the porous carbon-based particle. The silicon may be formed by depositing silicon on the porous carbon-based particle using silane gas. If necessary, a carbon layer may be further formed on a surface of the silicon carbon composite. By the carbon layer, conductivity is imparted, and the initial efficiency, life characteristics, and battery capacity characteristics of a secondary battery can be improved. A total amount of the carbon layer may be 5 wt% to 40 wt% based on a total of 100 wt% of the silicon carbon composite particles. The carbon layer may include at least one of amorphous carbon or crystalline carbon.

According to an exemplary embodiment, the silicon carbon composite may be a particle having a porous silicon-based particle and carbon provided on at least a portion of an inside and a surface of the porous silicon-based particle. This may be formed by etching silicon oxide to form porous silicon particles, such as a Si matrix, and then coating carbon. The description of the carbon layer described above may be applied to the carbon.

According to an exemplary embodiment, the silicon carbon composite may have a specific surface area of 0.5 to 10 $m^2$/g as measured by a BET method, a pore volume of 0.005 to 0.03 $cm^3$/g, and a pore size of 10 to 20 nm as measured by the BET method. The silicon carbon composite may have a pore volume of 0.005 to 0.03 $cm^3$/g as measured by a mercury penetration method.

According to an exemplary embodiment, the silicon carbon composite may have a $D_{90}$ particle diameter of 5 to 15 $\mu$m, a $D_{50}$ particle diameter of 1 to 10 $\mu$m, a $D_{min}$ of 1 to 3 $\mu$m, and a $D_{max}$ of 17 to 23 $\mu$m. In the present specification, the average particle diameter ($D_{50}$) may be defined as a particle diameter corresponding to 500 of the cumulative volume in the particle diameter distribution curve of particles. The average particle diameter ($D_{50}$) may be measured using, for example, a laser diffraction method. In the laser diffraction method, in general, particle diameters ranging from a submicron region to several millimeters can be measured, and results with high reproducibility and high resolvability can be obtained.

An exemplary embodiment provides a negative electrode active material including the silicon carbon composite according to the exemplary embodiments described above.

An exemplary embodiment provides a negative electrode composition including: the negative electrode active material according to the exemplary embodiment described above; a binder; and a conductive material.

According to an exemplary embodiment, the silicon carbon composite may be included in an amount of 0.1 part by weight to 10 parts by weight, for example, 1 part by weight to 10 parts by weight, based on 100 parts by weight of the negative electrode active material.

According to an exemplary embodiment, the negative electrode active material may further include a carbon-based active material. The carbon-based active material may be included in an amount of 90 parts by weight or more and 99.9 parts by weight or less, for example, 90 to 99 parts by weight, based on 100 parts by weight of a total negative electrode active material included in the negative electrode composition. The carbon-based active material may include at least one of natural graphite and artificial graphite. When the carbon-based active material includes both natural graphite and artificial graphite, a weight ratio of the artificial graphite and natural graphite may be 1:9 to 9:1, for example, 3:7 to 7:3. For example, based on 100 parts by weight of the carbon-based active material, the content of the natural graphite may be 10 to 70 parts by weight, and the content of the artificial graphite may be 30 to 90 parts by weight.

The natural graphite refers to graphite that occurs naturally, and examples thereof include scaled graphite, scaly graphite, or soil graphite. The natural graphite has the advantages of being abundant, being low in price, having high theoretical capacity and compaction density, and being able to realize high output.

According to one example, spheroidized natural graphite may be used as the natural graphite, and the degree of spheroidization may be 0.9 or more. According to one example, the natural graphite may be spheroidized natural graphite and have a tap density of 0.9 g/cc or more.

In the present specification, the degree of spheroidization may be, when a particle is projected, a value obtained by dividing a circumference of a circle having the same area as a projected image by a circumferential length of the projected image. The degree of spheroidization may be obtained from an SEM image, or alternatively, may be measured using a particle shape analyzer, such as Sysmex FPIA3000 available from Malvern. In addition, the crystal size can be confirmed through XRD analysis.

According to an exemplary embodiment of the present invention, the negative electrode composition may further include a binder and a conductive material, and the binder may be an aqueous binder.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder, metal powder such as aluminum powder and nickel powder; a conductive whisker such as zinc oxide and potassium titanate; a conductive metal oxide such as titanium oxide; a conductive material such as a polyphenylene derivative, and the like may be used.

According to an exemplary embodiment, the aqueous binder is included in an amount of 1 to 5 wt%, for example, about 3 to 4 wt% based on the solid content of the negative electrode composition, and the conductive material is included in an amount of 0.1 to 2 wt%, for example, about 1 wt% based on the solid content of the negative electrode composition.

An exemplary embodiment of the present invention provides a negative electrode including the negative electrode composition according to the exemplary embodiments described above.

Specifically, the negative electrode may include a negative electrode current collector and a negative electrode active material layer arranged on at least one surface of the negative electrode current collector. The negative electrode active material layer includes the negative electrode composition according to the exemplary embodiments described above.

The negative electrode active material layer may be formed by applying a negative electrode slurry including the negative electrode composition described above to at least one surface of a negative electrode current collector, and drying and roll-pressing the same.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m, but the thickness of the current collector is not limited thereto.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

An exemplary embodiment of the present invention provides a lithium secondary battery including the negative electrode according to the above-described exemplary embodiment, a positive electrode, and a separator.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum

EP 4 667 413 A1

and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The lithium secondary battery may further include an electrolyte. Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, Examples will be described in detail to specifically describe the present specification. However, the

7

Examples according to the present specification may be modified in other forms, and the scope of the present application is not construed as being limited to the following Examples. The Examples of the present application are provided to more completely explain the present specification to one skilled in the art.

**Example 1**

(1) Preparation of Silicon Carbon Composite 1

A cellulose powder was put into a tubular electric furnace and temperature was increased to 400°C at a rate of4°C/min, followed by heating for 2 hours under a nitrogen atmosphere. Thereafter, after the temperature of the electric furnace was increased to 900°C at a rate of 4°C/min, the electric furnace was heated under a nitrogen atmosphere for 2 hours. After mixing the above powder with sulfuric acid and nitric acid at a volume ratio of 3:1, the mixture was stirred at 60°C for 2 hours, and centrifuged to obtain precipitates. The obtained powder was washed five times with a solvent in which ethanol and distilled water were mixed at a volume ratio of 1:3, and then dried at 120°C for 12 hours. The carbon-based particles were put into a KOH solvent, which was then heated under a nitrogen atmosphere at 800°C for 2 hours to obtain a porous carbon structure. The porous carbon structure was washed three times with distilled water and then dried at 120°C for 12 hours or longer. The porous carbon structure was put into a horizontal electric furnace and processed by causing $SiH_4$/He (=5/95) gas to flow at a flow rate of 50 ml/min at 700°C for 1 hour, resulting in preparation of a silicon carbon composite. The silicon carbon composite was put into an electric furnace and heat-treated at 800°C for 2 hours. Thereafter, the heat-treated silicon carbon composite was placed in an electric furnace and reacted for 3 hours by causing methane to flow at 700°C, resulting in preparation of a silicon carbon composite negative electrode active material including a carbon layer on a surface.

(2) Preparation of Negative Electrode

A negative electrode slurry was prepared by mixing a negative electrode active material including the prepared silicon carbon composite, natural graphite, and artificial graphite at a weight ratio of 10:15:75; a conductive material including carbon black and SWCNTs; and a binder including carboxymethyl cellulose (CMC) and styrene butadiene rubber (SBR) at a weight ratio of 95.3:1:3.6 and adding a proper amount of distilled water so that the total solid content was about 46 wt%.
The negative electrode slurry was applied to a Cu metal thin film with a thickness of about 20 $\mu$m, which was then dried at a circulating air temperature of 60°C. Then, the thin film was roll-pressed, dried in a vacuum oven of 130°C for about a day, and punched into a circular shape of 1.4875 cm$^2$ to prepare a negative electrode.

(3) Preparation of Secondary Battery

A Li metal thin film punched to be 1.7671cm$^2$ was used as a positive electrode. A Li coin half-cell was prepared by interposing a porous polyethylene separator between the positive electrode and the negative electrode and injecting an electrolyte solution in which 1M $LiPF_6$ was dissolved in a mixed solution prepared by mixing EMC (ethyl methyl carbonate) and EC (ethylene carbonate) at a mixing ratio of 7:3 and an additive was included.

**Example 2**

(1) Preparation of Silicon Carbon Composite 2

SiO with a $D_{50}$ of 6 $\mu$m was put into a horizontal tube, and argon (Ar) gas was flowed at a flow rate of 1500 sccm for 1 hour to create an inert atmosphere. Argon gas was flowed at a flow rate of 150 sccm, and the temperature was increased to 650 °C at a rate of 10°C/min and maintained for 6 hours. The heat-treated SiO was taken out of the tube and immersed in an HF aqueous solution with a weight ratio of 20, followed by stirring at room temperature for 1 hour to remove the $SiO_2$ phase. The porous silicon from which the $SiO_2$ phase was removed was washed twice each with distilled water and ethanol and then collected through a pressure-reducing filter. The obtained porous silicon was dried in a vacuum oven at 600°C for 12 hours. Thereafter, the dried porous silicon was placed in an electric furnace and processed at 600°C by causing a mixed gas of argon and acetylene, mixed at a volume ratio of 9:1, to flow at a flow rate of 100 sccm for 3 hours, resulting in preparation of a final silicon carbon composite.

(2) Preparation of Negative Electrode and Secondary Battery

A negative electrode and a secondary battery were prepared in the same manner as in Example 1, except that silicon carbon composite 2 was used as the silicon carbon composite.

**Example 3**

(1) Preparation of Silicon Carbon Composite 3

A silicon carbon composite was prepared in the same manner as silicon carbon composite 2, except that SiO with a $D_{50}$ of 4 $\mu$m was used.

(2) Preparation of Negative Electrode and Secondary Battery

A negative electrode and a secondary battery were prepared in the same manner as in Example 1, except that silicon carbon composite 3 was used as the silicon carbon composite.

**Example 4**

(1) Preparation of Silicon Carbon Composite 4

A silicon carbon composite was prepared in the same manner as silicon carbon composite 2, except that the temperature was increased to 750°C at a rate of 10°C/min under inactive atmosphere and maintained for 6 hours.

(2) Preparation of Negative Electrode and Secondary Battery

A negative electrode and a secondary battery were prepared in the same manner as in Example 1, except that silicon carbon composite 4 was used as the silicon carbon composite.

**Comparative Example 1**

(1) Preparation of Metal-Doped $SiO_x$

SiO with Si and $SiO_2$ mixed at a molar ratio of 1:1 was placed in Crucible 1, heated to the sublimation temperature of 1400°C, and evaporated. Metal magnesium was separately heated at 800°C and evaporated. The crucible was depressurized to 0.1 torr and the raw materials were evaporated. The vaporous mixture containing Mg was reacted for 6 hours, and then condensed to a solid phase in a vacuum region of 800°C. The silicon-based active material prepared by the above method was pulverized using a ball mill for 3 hours. Thereafter, the silicon-based active material was reacted with methane at a flow rate of 1 L/min at 0.1 torr for 5 hours under an inert gas Ar atmosphere using a CVD apparatus to form a carbon layer on the surface of the silicon-based active material, resulting in preparation of a magnesium silicon oxide active material coated with a carbon layer ($D_{50}$ of prepared active material: 6 $\mu$m).

(2) Preparation of Negative Electrode and Secondary Battery

A negative electrode and a secondary battery were prepared in the same manner as in Example 1, except that the metal-doped $SiO_x$ obtained by the above process was used as a negative electrode active material, instead of a silicon carbon composite.

**Comparative Example 2**

(1) Preparation of Silicon Carbon Composite 5

A silicon carbon composite was prepared in the same manner as silicon carbon composite 1, except that the heat treatment process and carbon coating process were not performed for the prepared silicon carbon composite at 800°C in an electric furnace.

(2) Preparation of Negative Electrode and Secondary Battery

A negative electrode and a secondary battery were prepared in the same manner as in Example 1, except that silicon carbon composite 5 was used as the silicon carbon composite.

**Comparative Example 3**

(1) Preparation of Silicon Carbon Composite 6

A silicon carbon composite was prepared in the same manner as silicon carbon composite 1, except that the heat treatment process was not performed for the prepared silicon carbon composite at 800°C in an electric furnace.

(2) Preparation of Negative Electrode and Secondary Battery

A negative electrode and a secondary battery were prepared in the same manner as in Example 1, except that silicon carbon composite 6 was used as the silicon carbon composite.

**Comparative Example 4**

(1) Preparation of $SiO_x$

A mixture of Si and $SiO_2$ having a molar ratio of 1:1 was placed in a furnace and heat-treated at 1300°C for 6 hours under an Ar atmosphere to obtain $SiO_x$. The $SiO_x$ obtained by the above method was pulverized using a ball mill for 3 hours.
Thereafter, the $SiO_x$ was reacted with methane at a flow rate of 1 L/min at 900°C and 0.1 torr for 5 hours under an inert gas Ar atmosphere using a CVD apparatus to form a carbon layer on the surface of the silicon-based active material, resulting in preparation of a $SiO_x$/carbon composite.

(2) Preparation of Negative Electrode and Secondary Battery

A negative electrode and a secondary battery were prepared in the same manner as in Example 1, except that the $SiO_x$ obtained by the above process was used as a negative electrode active material, instead of a silicon carbon composite.

**Comparative Example 5**

(1) Preparation of Silicon Carbon Composite 7

Of the total mixture of 100 parts by weight, 35 parts by weight of silicon (Si, $D_{50}$: 809 nm), 40 parts by weight of pitch-based carbon, and 25 parts by weight of flake graphite were mixed, dry-milled at 2,000 rpm for 3 minutes, and then heat-treated at about 1,150°C for 4 hours under an argon (Ar) gas atmosphere, resulting in preparation of a negative electrode active material.

(2) Preparation of Negative Electrode and Secondary Battery

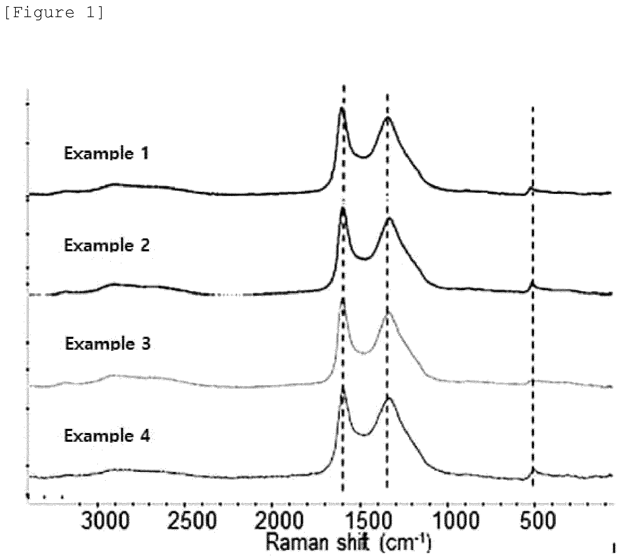

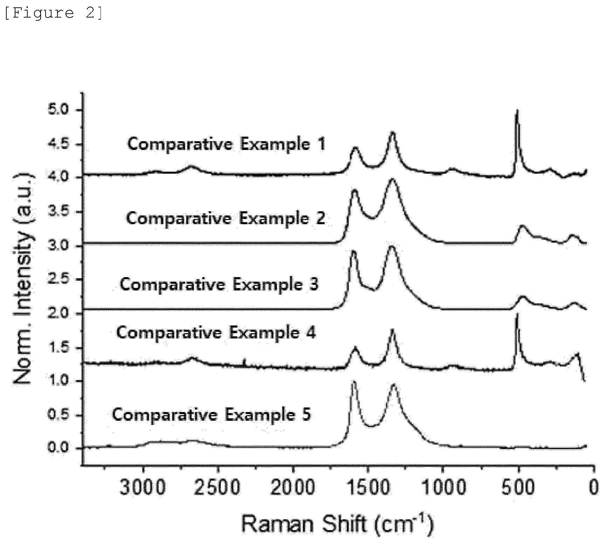

A negative electrode and a secondary battery were prepared in the same manner as in Example 1, except that silicon carbon composite 7 was used as the silicon carbon composite.
The Raman spectrum analysis results of the negative electrode active materials prepared in the examples and comparative examples are shown in FIGS. 1 and 2, and the positions and ratios of the peak of the D band, the peak of the G band, and the Si peak are shown in Table 1 below.

[Table 1]

| | Peak position of D band ($cm^{-1}$) | Peak position of G band ($cm^{-1}$) | Si peak position ($cm^{-1}$) | D band/ Si peak ($B_D/B_{Si}$) | G band/ Si peak ($B_G/B_{Si}$) | D/G band ratio ($B_D/B_G$) |
|---|---|---|---|---|---|---|
| Example 1 | 1350 | 1600 | 509 | 28.7 | 19.3 | 1.49 |
| Example 2 | 1345 | 1600 | 512 | 23.9 | 16.0 | 1.49 |
| Example 3 | 1350 | 1591 | 502 | 31.4 | 21.4 | 1.47 |
| Example 4 | 1349 | 1604 | 501 | 25.1 | 16.7 | 1.50 |
| Comparative Example 1 | 1340 | 1600 | 517 | 1.1 | 0.7 | 1.81 |
| Comparative Example 2 | 1349 | 1594 | 475 | 4.4 | 1.8 | 1.73 |

(continued)

|  | Peak position of D band (cm$^{-1}$) | Peak position of G band (cm$^{-1}$) | Si peak position (cm$^{-1}$) | D band/ Si peak ($B_D/B_{Si}$) | G band/ Si peak ($B_G/B_{Si}$) | D/G band ratio ($B_D/B_G$) |
|---|---|---|---|---|---|---|
| Comparative Example 3 | 1340 | 1596 | 476 | 4.8 | 2.6 | 1.86 |
| Comparative Example 4 | 1342 | 1600 | 515 | 0.9 | 0.6 | 1.69 |
| Comparative Example 5 | 1348 | 1597 | 507 | 168 | 204 | 1.57 |

The batteries prepared in the examples and comparative examples were evaluated as follows, and the results are shown in Table 2 below.

**<Particle Size Analysis>**

The particle size of the negative electrode active material was analyzed by a laser diffraction particle size analysis method using an apparatus available from Malvern.

**<Discharge Capacity, Initial Efficiency, and Capacity**

**Retention Rate>**

The charging and discharging were performed at 0.1C for the first cycle and the second cycle, and the charging and discharging were performed at 0.5C from the third cycle to the 299th cycle. At the 300th cycle, the charge and discharge were terminated in a charge state (a state in which lithium ions were put in the negative electrode).

Charging conditions: CC (constant current)/CV (constant voltage) (5 mV/0.005 C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (first time discharge capacity/first time charge capacity) $\times$ 100%
The capacity retention ratio was derived by the following calculations.
Capacity retention rate (%) = (299$^{th}$ discharge capacity/first time discharge capacity) $\times$ 100%

**<Slurry Viscosity Change Rate>**

To measure the slurry viscosity change rate, a slurry was prepared by mixing graphite, the negative electrode active material, carbon black, CMC, and PAA at a weight ratio of 77:20:1:1:1. For the prepared slurry, the shear viscosity at shear rate = 1Hz was measured, and the amounts of change thereof over time was determined and compared.
The rate of change in shear viscosity (%) was derived by the following formula.

rate of change (%) in shear viscosity = ((shear viscosity of slurry after 2 days - shear viscosity of slurry immediately after mixing)/shear viscosity of slurry immediately after mixing) $\times$ 100%

[Table 2]

| Battery | Discharge capacity (mAh/g) | Initial efficiency (%) | Capacity retention rate (%) | Slurry viscosity change rate (%, after 2 days) | Pouch volume change rate (%, @40°C, after 2 days) |
|---|---|---|---|---|---|
| Example 1 | 504 | 91.3 | 89.0 | -1.2 | 0.3 |
| Example 2 | 504 | 91.0 | 88.5 | -0.5 | 0.5 |
| Example 3 | 504 | 91.1 | 88.6 | -0.3 | 0.3 |

(continued)

| Battery | Discharge capacity (mAh/g) | Initial efficiency (%) | Capacity retention rate (%) | Slurry viscosity change rate (%, after 2 days) | Pouch volume change rate (%, @40°C, after 2 days) |
|---|---|---|---|---|---|
| Example 4 | 504 | 91.1 | 88.3 | -1.0 | 0.2 |
| Comparative Example 1 | 450 | 87.2 | 71.5 | -1.1 | 0.4 |
| Comparative Example 2 | 504 | 88.9 | 84.1 | -41.6 | 49.3 |
| Comparative Example 3 | 504 | 88.5 | 84.8 | -33.2 | 34.1 |
| Comparative Example 4 | 439 | 84.9 | 66.2 | -0.9 | 1.0 |
| Comparative Example 5 | 464 | 87.6 | 85.2 | -3.4 | 2.1 |

As shown in Table 2, it was confirmed that Examples 1 to 4 in which the ratio of $B_D/B_{Si}$ or $B_G/B_{Si}$ falls within the range of greater than 5 and less than 50 exhibited high capacity and efficiency, and there was little change in the slurry viscosity change rate and the pouch volume change rate.

Comparative Examples 1 and 4 in which the ratios of $B_D/B_{Si}$ and $B_G/B_{Si}$ are less than 5 exhibited lower capacity efficiency and lower cycle capacity retention rate, compared to Examples 1 to 4. This is because the highly crystalline silicon caused severe volume changes during charging and discharging.

Comparative Examples 2 and 3 correspond to a case where the ratio of $B_G/B_{Si}$ or $B_D/B_{Si}$ falls within the range of greater than 5 and less than 50, but the Si peak appears outside the range of 495 cm$^{-1}$ to 515 cm$^{-1}$. It was confirmed that Comparative Examples 2 and 3 exhibited low cycle capacity retention rates, large slurry viscosity change rates, and high pouch volume change rates due to gas generation. This is because the high amorphous nature of silicon, which causes a decrease in viscosity and gas generation, increases its reactivity with the solvent.

It can be confirmed that in Comparative Example 5 in which the ratios of $B_D/B_{Si}$ and $B_G/B_{Si}$ exceed 50, indicating that the carbon in the active material is present in a crystalline form and there is a bond in the crystalline structure, the charge transfer path is interrupted, and the contribution of silicon to the electrochemical performance is reduced, leading to a decrease in efficiency.

**Claims**

1. A silicon carbon composite wherein, in a Raman spectrum, a ratio $B_D/B_{Si}$ of an intensity of a D band to an intensity of a Si peak or a ratio $B_G/B_{Si}$ of an intensity of a G band to the intensity of the Si peak is greater than 5 and less than 50, and a position of the Si peak is present between 495 cm$^{-1}$ and 515 cm$^{-1}$.

2. The silicon carbon composite of claim 1, wherein a ratio $B_D/B_G$ of the intensity of the D band to the intensity of the G band is greater than 1.3 and less than 1.7.

3. The silicon carbon composite of claim 1, wherein the ratio $B_D/B_{Si}$ of the intensity of the D band to the intensity of the Si peak and the ratio $B_G/B_{Si}$ of the intensity of the G band to the intensity of the Si peak are greater than 5 and less than 50.

4. The silicon carbon composite of claim 1, wherein the ratio $B_D/B_{Si}$ of the intensity of the D band to the intensity of the Si peak or the ratio $B_G/B_{Si}$ of the intensity of the G band to the intensity of the Si peak is greater than 10 and less than 40.

5. The silicon carbon composite of claim 2, wherein the ratio $B_D/B_G$ of the intensity of the D band to the intensity of the G band is greater than 1.4 and less than 1.6.

6. The silicon carbon composite of claim 1, wherein the silicon carbon composite is a particle comprising a porous carbon-based particle and silicon provided on at least a portion of an inside and a surface of the porous carbon-based particle, or a particle comprising a porous silicon-based particle and carbon provided on at least a portion of an inside and a surface of the porous silicon-based particle.

7. A negative electrode active material comprising the silicon carbon composite of any one of claims 1 to 6.

8. A negative electrode composition comprising:

   the negative electrode active material of claim 7;
   a binder; and
   a conductive material.

9. The negative electrode composition of claim 8, wherein the negative electrode active material further comprises a carbon-based active material.

10. The negative electrode composition of claim 9, wherein the silicon carbon composite is included in an amount of 0.1 part by weight to 10 parts by weight based on 100 parts by weight of the negative electrode active material.

11. The negative electrode composition of claim 9, wherein the carbon-based active material comprises artificial graphite and spheroidized natural graphite.

12. A negative electrode comprising the negative electrode composition of claim 8.

13. A lithium secondary battery comprising:

   the negative electrode of claim 12;
   a positive electrode; and
   a separator.

14. A battery module comprising the lithium secondary battery of claim 13.

15. A battery pack comprising the lithium secondary battery of claim 13.

16. A battery pack comprising the battery module of claim 14.

[Figure 1]

[Figure 2]

## INTERNATIONAL SEARCH REPORT

| International application No. |
|---|
| **PCT/KR2024/015358** |

| A. | CLASSIFICATION OF SUBJECT MATTER |
|---|---|

**C01B 32/00**(2017.01)i; **C01B 33/02**(2006.01)i; **C01B 33/035**(2006.01)i; **H01M 4/36**(2006.01)i; **H01M 4/587**(2010.01)i; **H01M 4/583**(2010.01)i; **H01M 4/133**(2010.01)i; **H01M 4/134**(2010.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

C01B 32/00(2017.01); C01B 32/05(2017.01); C01B 32/10(2017.01); C01B 32/182(2017.01); C01B 32/21(2017.01); H01M 10/052(2010.01); H01M 4/36(2006.01); H01M 4/38(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라만 스펙트럼(Raman spectrum), Si 피크(Si peak), D 밴드(D band), G 밴드(G band), 실리콘 카본 복합체(silicon carbon complex), 음극(negative electrode), 리튬 이차전지(lithium secondary battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2019-0132545 A (SHOWA DENKO K.K.) 27 November 2019 (2019-11-27)<br>See paragraphs [0018], [0020], [0027]-[0029], [0073], [0091]-[0095], [0100], [0112], [0123], [0143], [0172] and [0174]; and table 3. | 1-2,5-16 |
| A | | 3-4 |
| A | KR 10-2023-0131648 A (SK ON CO., LTD.) 14 September 2023 (2023-09-14)<br>See entire document. | 1-16 |
| A | WO 2021-241749 A1 (SHOWA DENKO K.K.) 02 December 2021 (2021-12-02)<br>See entire document. | 1-16 |
| A | KR 10-2021-0009468 A (SK INNOVATION CO., LTD. et al.) 27 January 2021 (2021-01-27)<br>See entire document. | 1-16 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 January 2025** | **31 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/015358** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-1767393 B1 (KOREA INSTITUTE OF GEOSCIENCE AND MINERAL RESOURCES(KIGAM)) 11 August 2017 (2017-08-11)<br>    See entire document. | 1-16 |

Form PCT/ISA/210 (second sheet) (July 2022)

**INTERNATIONAL SEARCH REPORT**
Information on patent family members

International application No.

**PCT/KR2024/015358**

| Patent document cited in search report | | | Publication date (day/month/year) | Patent family member(s) | | | Publication date (day/month/year) |
|---|---|---|---|---|---|---|---|
| KR | 10-2019-0132545 | A | 27 November 2019 | CN | 110998927 | A | 10 April 2020 |
| | | | | EP | 3667782 | A1 | 17 June 2020 |
| | | | | WO | 2019-031597 | A1 | 14 February 2019 |
| KR | 10-2023-0131648 | A | 14 September 2023 | CN | 116722140 | A | 08 September 2023 |
| | | | | EP | 4243119 | A1 | 13 September 2023 |
| | | | | US | 2023-0282812 | A1 | 07 September 2023 |
| WO | 2021-241749 | A1 | 02 December 2021 | CN | 115667136 | A | 31 January 2023 |
| | | | | CN | 115667136 | B | 06 February 2024 |
| | | | | CN | 115668539 | A | 31 January 2023 |
| | | | | CN | 115668545 | A | 31 January 2023 |
| | | | | CN | 115699368 | A | 03 February 2023 |
| | | | | EP | 4159681 | A1 | 05 April 2023 |
| | | | | EP | 4159681 | A4 | 03 July 2024 |
| | | | | EP | 4160726 | A1 | 05 April 2023 |
| | | | | EP | 4160726 | A4 | 03 July 2024 |
| | | | | EP | 4160727 | A1 | 05 April 2023 |
| | | | | EP | 4160728 | A1 | 05 April 2023 |
| | | | | JP | 2021-187733 | A | 13 December 2021 |
| | | | | JP | 7405249 | B2 | 26 December 2023 |
| | | | | JP | 7420241 | B2 | 23 January 2024 |
| | | | | JP | 7472972 | B2 | 23 April 2024 |
| | | | | JP | 7501623 | B2 | 18 June 2024 |
| | | | | JP | WO2021-241747 | A1 | 02 December 2021 |
| | | | | JP | WO2021-241748 | A1 | 02 December 2021 |
| | | | | JP | WO2021-241750 | A1 | 02 December 2021 |
| | | | | JP | WO2021-241754 | A1 | 02 December 2021 |
| | | | | KR | 10-2023-0015992 | A | 31 January 2023 |
| | | | | KR | 10-2023-0016213 | A | 01 February 2023 |
| | | | | KR | 10-2023-0016214 | A | 01 February 2023 |
| | | | | KR | 10-2023-0017259 | A | 03 February 2023 |
| | | | | KR | 10-2723357 | B1 | 31 October 2024 |
| | | | | KR | 10-2742523 | B1 | 17 December 2024 |
| | | | | US | 12002958 | B2 | 04 June 2024 |
| | | | | US | 12148919 | B2 | 19 November 2024 |
| | | | | US | 12155065 | B2 | 26 November 2024 |
| | | | | US | 2023-0207780 | A1 | 29 June 2023 |
| | | | | US | 2023-0216025 | A1 | 06 July 2023 |
| | | | | US | 2023-0223537 | A1 | 13 July 2023 |
| | | | | US | 2023-0231111 | A1 | 20 July 2023 |
| | | | | WO | 2021-241747 | A1 | 02 December 2021 |
| | | | | WO | 2021-241748 | A1 | 02 December 2021 |
| | | | | WO | 2021-241750 | A1 | 02 December 2021 |
| | | | | WO | 2021-241754 | A1 | 02 December 2021 |
| KR | 10-2021-0009468 | A | 27 January 2021 | | None | | |
| KR | 10-1767393 | B1 | 11 August 2017 | CN | 108417782 | A | 17 August 2018 |
| | | | | CN | 108417782 | B | 02 March 2021 |
| | | | | US | 11362326 | B2 | 14 June 2022 |
| | | | | US | 2019-0355985 | A1 | 21 November 2019 |
| | | | | WO | 2018-147508 | A1 | 16 August 2018 |

Form PCT/ISA/210 (patent family annex) (July 2022)

**EP 4 667 413 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140497